(19) Europäisches Patentamt
European Patent Office
Office européen des brevets

(11) Veröffentlichungsnummer: **0 332 965**
**A1**

(12) # EUROPÄISCHE PATENTANMELDUNG

(21) Anmeldenummer: **89103867.1**

(22) Anmeldetag: **06.03.89**

(51) Int. Cl.4: **C08K 13/02 , C08K 5/00 , C08L 101/00 , C08L 77/00 , //(C08L101/00,77:10), (C08L77/00,77:10)**

(30) Priorität: **15.03.88 DE 3808493**

(43) Veröffentlichungstag der Anmeldung:
**20.09.89 Patentblatt 89/38**

(84) Benannte Vertragsstaaten:
**DE ES FR GB IT**

(71) Anmelder: **BAYER AG**

**D-5090 Leverkusen 1 Bayerwerk(DE)**

(72) Erfinder: **Müller, Friedemann, Dr.**
**Am Steinacker 5**
**D-4040 Neuss 21(DE)**
Erfinder: **Fuhr, Karl, Dr.**
**Krüllsdijk 55**
**D-4150 Krefeld(DE)**
Erfinder: **Ott, Karl-Heinz, Dr.**
**Paul-Klee-Strasse 54**
**D-5090 Leverkusen 1(DE)**

(54) **Aromatische Polyamide als Flammschutzmittel-Synergisten mit Antidripping-Wirkung für aliphatische Polyamidformmassen und ihre Verwendung.**

(57) Die Erfindung betrifft aromatische Polyamide und/oder Polyimidamide als Antidrippingmittel, die fernerhin in Kombination mit anderen, üblichen Flammschutzmitteln synergistisch wirken und das brennende Abtropfen von überwiegend aliphatischen/cycloaliphatischen Polyamiden verhindern. Trotz nur niedriger Mengen an üblichen Flammschutzmitteln wird in Gegenwart kleiner Mengen, z.B. 1 % an Aramiden, z.B. in Form von Fasern, eine überraschend hohe Flammschutzwirkung erzielt und das gefährliche brennende Abtropfen des Polyamids sehr stark vermindert oder verhindert.

Die Flammschutzmittel-Kombinationen bestehen aus

a) 0,05 bis 10 Gew.-Teilen, bevorzugt 0,5 bis 5 Gew.-Teilen aromatischer Polyamide in Form von (gemahlenen) Fasern, (feinteiligen) Pulvern oder auf Trägern niedergeschlagenen aromatischen Polyamiden und

b) 1 bis 30 Gew.-Teilen, bevorzugt 1 bis 12 Gew.-Teilen bekannter Flammschutzmitteladditive, die Halogen-, Phosphor- und Stickstoffderivate oder andere, übliche oxidische oder salzartige Flammschutzmittel oder roten Phosphor darstellen, insbesondere aber halogenfreie Flammschutzmittel sind.

EP 0 332 965 A1

# Aromatische Polyamide als Flammschutzmittel-Synergisten mit Antidripping-Wirkung für aliphatische Polyamidformmassen und ihre Verwendung

Die Erfindung betrifft aromatische Polyamide und/oder Polyimidamide als Antidrippingmittel, die fernerhin in Kombination mit anderen, üblichen Flammschutzmitteln synergistisch wirken und das brennende Abtropfen von überwiegend aliphatischen/cycloaliphatischen Polyamiden verhindern. Trotz nur niedriger Mengen an üblichen Flammschutzmitteln wird in Gegenwart kleiner Mengen, z.B. 1 % an Aramiden, z.B. in Form von Fasern, eine überraschend hohe Flammschutzwirkung erzielt und das gefährliche brennende Abtropfen des Polyamids sehr stark vermindert oder verhindert.

Die Flammschutzmittel-Kombinationen bestehen aus

a) 0,05 bis 10 Gew.-Teilen, bevorzugt 0,5 bis 5 Gew.-Teilen aromatischer Polyamide in Form von (gemahlenen) Fasern, (feinteiligen) Pulvern oder auf Trägern niedergeschlagenen aromatischen Polyamiden und

b) 1 bis 30 Gew.-Teilen, bevorzugt 1 bis 12 Gew.-Teilen bekannter Flammschutzmitteladditive, die Halogen-, Phosphor- und Stickstoffderivate oder andere, übliche oxidische oder salzartige Flammschutzmittel oder roten Phosphor darstellen, insbesondere aber halogenfreie Flammschutzmittel sind.

Die aromatischen Polyamide bestehen überwiegend, d.h. zu mehr als 50 Gew.-Teilen, aus aromatischen Dicarbonsäuren und aromatischen Diaminen. Sie können in feinteiliger Form als Fasern und/oder Pulver verwendet werden oder auf Trägern niedergeschlagen sein. Aromatische Polyamide sind z.B. solche, die unter dem Begriff Aramide bekannt sind. Die aromatischen Polyamide können nach bekannten Verfahren hergestellt werden, z.B. durch Kondensation aus (aktivierten) Säurederivaten mit Diaminen oder nach Grenzflächenpolykondensationsmethoden.

Der Zusatz von aromatischen Polyamiden zu überwiegend aliphatischen/cycloaliphatischen Polyamiden verhindert deren brennendes Abtropfen im Brandtest. In Kombination mit bekannten Flammschutzmitteln wirken die aromatischen Polyamide deutlich synergistisch und vermindern die notwendige Zusatzmenge an solchen Flammschutzadditiven deutlich. So wird beim Einsatz von aromatischen Polyamiden in Kombination mit bekannten Flammschutzadditiven, wie organischen Halogenverbindungen und Halogensynergisten, bei Einsatzmengen, die überlicherweise noch keine Flammschutzwirkung entwickeln, bereits ein Selbstverlöschen gemäß dem Test nach UL-94 mit der Bewertung V-1 erzielt. Die Kunststoffe können außer den erfindungsgemäßen Additiv-Kombinationen weitere Additive enthalten, auch solche, die als Komponenten für Flammschutzmittelkombinationen bekannt sind, wie Metalloxide und Metallsalze.

Der Einsatz thermoplastischer Formmassen erfordert in vielen Anwendungen des Elektro-, Bau- und Fahrzeugsektors Flammwidrigkeit und die Vermeidung des brennenden Abtropfens, um einen hohen Sicherheitsstand zu erreichen. Die Beurteilung kann nach den Testverfahren gemäß UL-94 Underwriters' Laboratories durchgeführt werden. Nicht tropfende, selbstverlöschende Proben müssen demnach die Klassifizierung UL-94 V-1 erreichen.

Es ist bekannt, Polyamiden zur Verminderung ihrer Brennbarkeit halogenhaltige Flammschutzmittel, insbesondere organische Brom- und/oder Chlorverbindungen zusammen mit Metalloxiden oder ihren Mischungen, z.B. Antimonoxid, Zinnoxid, Zinkoxid und Zinkborat in seinen verschiedenen Hydrat-Stufen, zuzusetzen.

Zur Erzielung der Klasseneinstufung V-1 nach UL-94 ohne brennendes Abtropfen müssen im allgemeinen den thermoplastischen Formmassen größere Mengen von Halogenverbindungen und synergistischen Additiven zugesetzt werden. So werden z.B. für Polyamid Mengen bis zu 30 Gew.-Teilen Dechlorane® auf 100 Gew.-Teile Polyamid zugesetzt (vgl. Gächter/Müller, Kunststoffadditive, Carl Hanser Verlag, München/Wien 1979, Kapitel 10, Brandschutzausrüstung für Thermoplaste, S. 387 ff). Solche großen Additivmengen setzen erfahrungsgemäß jedoch sonstige technisch wichtigen Eigenschaften, wie mechanische Festigkeit und elektrische Eigenschaften, z.B. die Kriechstromfestigkeit, herab.

Außerdem können bei Verwendung von größeren Mengen an Stickstoffverbindungen auf Basis von Melamin(derivaten) auch unerwünschte Oberflächenbeläge auf Polyamid durch Migration gebildet werden. Zudem fördern Melamin und seine Derivate häufig das Abtropfen bei Polyamiden.

Mit rotem Phosphor wird zwar bei Polyamiden hohe Flammwidrigkeit erreicht, jedoch stört hier die intensive Eigenfarbe und die thermische Abspaltung von flüchtigen Phosphorkomponenten. Nachteilig ist auch die mögliche Beeinträchtigung des elektrischen Widerstandes infolge Bildung von Säurebestandteilen.

Zur Erzielung einer optimalen Kombination von Anwendungseigenschaften und Brandverhalten ist einerseits die Beeinträchtigung der Produktqualität durch Reduzierung der Additivmengen möglichst gering zu halten, andererseits aber ein hoher Flammwidrigkeitsgrad sicherzustellen, im wesentlichen dadurch

bestimmt, daß im Falle der Eidnwirkung einer Fremdzündquelle vor allem das brennende Abtropfen vermieden wird und ein Selbstverlöschen erfolgt.

Überraschend wurde gefunden, daß durch den Zusatz von 0,05 bis 10 Gew.-%, vorzugsweise 0,5 bis 5 Gew.-%, ins besondere 0,7 bis 3,5 Gew.-% aromatischer Polyamide, bevorzugt Aramide, in Faser- oder Pulverform oder niedergeschlagen auf anorganischen Trägern, zu aliphatischen/cycloaliphatischen, thermoplastischen Polyamiden, das brennende Abtropfen dieser Polyamide beseitigt wird und auch selbstverlöschende Eigenschaften von solchen Polyamiden mit weitaus geringeren Flammschutzmittel-Additivmengen, z.B. in Form von organischem Brom-und/oder Chlorverbindungen und/oder Stickstoff- und/oder Phosphorverbindungen als üblicherweise erforderlich, erreicht werden können.

Bevorzugt sind für viele Anwendungen Flammschutzmittelmischungen aus aromatischen Polyamiden und halogenfreien Flammschutzmittel-Additivmengen, welche selbstverlöschende Eigenschaften hervorrufen, insbesondere Flammschutzmitteladditive auf Stickstoff-und/oder Phosphor-Basis. Kombinationen aus aromatischen Polyamiden (als Antidrippingmitteln) und aus üblichen Flammschutzmitteln aus Phosphor-Basis sind ganz besonders bevorzugt. Die Flammschutzmittelkombinationen sind zu 1,05 bis 40 Gew.-%, bevorzugt 1,5 bis 17 Gew.-%, in den so hergestellten Mischungen aus (cyclo)aliphatischen Polyamiden und aromatischen Polyamiden bzw: Flammschutzmittelkombinationen enthalten.

Zur Erzielung dieser synergistischen Flammschutzwirkung bzw. einer Antidrippingwirkung sind erfindungsgemäß aromatische Polyamide geeignet, die zum überwiegenden Teil, d.h. zu mehr als 50 Gew.-%, aus aromatischen Dicarbonsäuren und aromatischen Diaminen bestehen. Sie können als Fasern, wie sie bei technisch üblichen Herstellverfahren anfallen, als gemahlene Fasern, (feinteilige) Pulver sowie als auf Trägern niedergeschlagene aromatische Polyamide eingesetzt werden. Geeignet sind aromatische Polyamide mit Molekulargewichten von 2000 bis über 50 000.

Gegenstand der Erfindung sind somit Flammschutzmittelkombinationen mit Antidripping-Wirkung, bestehend aus

a) 0,05 bis 10 Gew.-Teilen, vorzugsweise 0,5 bis 5 Gew.-Teilen, insbesondere 0,7 bis 3,5 Gew.-Teilen von aromatischen Polyamiden und/oder Polyimidamiden mit mehr als 50 Gew.-%, vorzugsweise mehr als 75 Gew.-% an aromatischen Aufbaukomponenten und

b) 1 bis 30 Gew.-Teilen, vorzugsweise 1 bis 12 Gew.-Teilen, insbesondere 1,5 bis 7,5 Gew.-Teilen von bekannten Flammschutzadditiven in Form organischer Halogen- und/oder Phosphor- und/oder Stickstoffverbindungen oder deren Mischungen, gegebenenfalls zusammen mit Metalloxiden, -carbonaten, -silikaten, -boraten und -phosphaten, bevorzugt Zinkborat, Zinkphosphat, Zinkcarbonat, Zinnoxid, Zinkoxid und/oder rotem Phosphor.

Erfindungsgemäße aromatische Polyamide sind beispielsweise Aramide, wie sie als Fasermaterialien nach Kirk-Othmer, Encyclopedia of Chemical Technology, Third Edition, Volume 3, S. 213 ff. definiert und mit ihren chemischen Strukturen aufgeführt sind.

Erfindungsgemäß sind auch Aramide geeignet, die als Pulver, z.B. bei der Synthese nach dem Grenzflächenpolykon densationsverfahren ausfallen. Die Molekularmasse dieser Produkte kann unter 50 000 bis zu 2000 liegen. Ihre bevorzugte Teilchengröße liegt bei 5 bis 20 µm.

Ferner sind erfindungsgemäß Aramide besonders geeignet, die nach dem Grenzflächenverfahren oder nach dem Lösungsverfahren in Gegenwart von oberflächenreichen Füllstoffen synthetisiert werden und sich dabei bevorzugt auf der Oberfläche des Füllstoffes abscheiden.

Als Füllstoffe, die nach diesem Verfahren modifiziert, oder auch getrennt in den (cyclo)aliphatischen Polyamiden verwendet können, eignen sich Metallverbindungen wie Antimonoxid, Wismutoxid, Zinnoxid, Zinkoxid, Zinkborat, Aluminiumoxid, Aluminiumphosphat und/oder auch Nichtmetalle, wie roter Phosphor.

Die aromatischen Polyamide können auch Anteile unter 50 Gew.-% einer Gesamtmenge von aliphatischen Dicarbonsäuren und Diaminen enthalten, wie sie für die Synthese der technisch bekannten Polyamide Verwendung finden (s. Ullmanns Encyklopädie der technischen Chemie, 4. Auflage, Band 19, S. 39 ff).

Die erfindungsgemäß als Antidrippingmittel geeigneten aromatischen Polyamide werden üblicherweise aus aromatischen Arylendicarbonsäuren und aromatischen Diaminen durch Lösungskondensation oder durch Grenzflächenkondensation hergestellt.

Arylendicarbonsäuren sind insbesondere Phthalsäure, Isophthalsäure und Terephthalsäure.

Geeignete aromatische Diamine sind beispielsweise: o-Phenylendiamin, m-Phenylendiamin, p-Phenylendiamin, Diaminodiphenyle, in denen die Phenylbausteine über Heteroatome oder Gruppen verknüpft sind, entsprechend der Formel

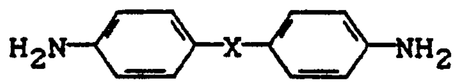

X = -O-, -S-, $-SO_2-$, -CO-, $-CH_2-$, $-C(CH_3)_2-$, $-CF_2-$.

Ferner sind geeignet Polyimidamide wie

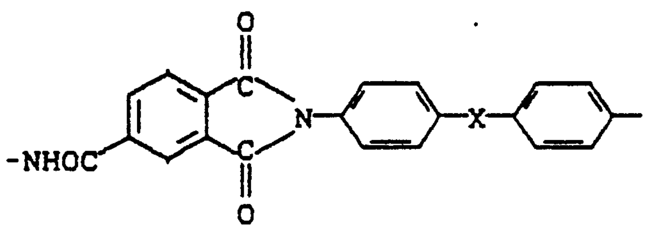

X = $-CH_2-$, -O-.

Erfindungsgemäß sind auch Aramide geeignet, die Heterocyclenstrukturen in der Hauptkette enthalten, wie Oxdiazol-, Triazol-, Bithiazol-, Benzimidazol-, Hydantoin- und Chinazolon-Struckturen (s. Ullmanns Encyklopädie der Technischen Chemie, 4. Auflage, Band 11, S. 345 bis 350) und gegebenenfalls über entsprechende Dicarbonsäuren, Diamine oder Aminocarbonsäuren aufgebaut wurden.

Erfindungsgemäße aromatische Polyamide sind auch solche, die zu über 50 Gesamtgewichtsprozent aus vorgenannten aromatischen Polyamiden bestehen und deren Rest (cyclo)aliphatische Carbonsäuren und/oder (cyclo)aliphatische Diamine sind. Als aliphatische Dicarbonsäuren können beispielsweise eingesetzt werden:

Adipinsäure, 2,2,4- und 2,4,4-Trimethyladipinsäure, Azelainsäure, Sebazinsäure, Decandicarbonsäure und Dodecandicarbonsäure.

Als aliphatische Diamine können beispielsweise eingesetzt werden:

Hexamethylendiamin, 2,2,4- und 2,4,4-Trimethylhexamethylendiamin, Diamino-dicyclohexylmethan-Isomere, Diamino-dicyclohexylpropan-Isomere, Isophorondiamine und Xylylendiamine.

Die erfindungsgemäßen Antidrippingmittel finden Verwendung in überwiegend aliphatischen/cycloaliphatischen, thermoplastischen Polyamiden, die nach dem bekannten Polykondensations- und/oder Polymerisationsprozeß aus überwiegend aliphatischen/cycloaliphatischen Diaminen und Dicarbonsäuren und/oder Lactamen ab 5-Ringen hergestellt werden. Ausgangsmaterialien sind aliphatische oder gemischt aliphatische aromatische Dicarbonsäuren mit unter 50 Gew.-% aromatischen Bestandteilen, wie Adipinsäure, 2,4,4- und 2,4,4-Trimethyladipinsäure, Azelainsäure, Sebazinsäure, Decandicarbonsäure und Dodecandicarbonsäure, Isophthalsäure und Terephthalsäure, aliphatische und aromatische Diamine wie Hexamethylendiamin, 2,2,4- und 2,4,4-Trimethylhexamethylendiamin, Diamino-dicyclohexylmethanisomere, Diamino-dicyclohexylpropanisomere und Isophorondiamin(isomere), Xylylendiamine, Aminocarbonsäuren wie $\epsilon$-Aminocapronsäure und $\omega$-Aminocarbonsäuren wie $\omega$-Aminoundecansäure.

Bevorzugt, sind Polyamid 6, Polyamid 6,6, Polyamid 6,10, Polyamid 6,12, Polyamid 11, Polyamid 12, Polyamid 6T6 oder 6I6 mit Aromatenanteilen unter 50 Gew.-%.

Für die Flammschutzmittelkombinationen geeignete organische Halogenverbindungen sind generell bekannt, beispielsweise halogenierte Diels-Alder-Addukte, z.B. Hexachlorcyclopentadien, Hexachlorendomethylentetrahydrophthalsäure und deren Anhydrid, sowie Tetrachlorphthalsäureanhydrid. Weiter kommen beispielsweise als bromhaltige Flammschutzmittel in Frage: Hexabrombenzol, Pentabromtoluol, Octa- und Decabromdiphenyl, Octa- und Decabromdiphenylether, Hexabrom-bis-phenoxyethan, Ethylen-bis-tetrabromphthalimid und deren Gemische, sowie gegebenenfalls zusätzlich Antidrippingmittel wie z.B. Polytetrafluorethylen.

Für die Flammschutzmittelkombinationen eignen sich besonders organische Phosphorverbindungen wie Phosphate, Phosphonate oder Phosphinate. Bevorzugt sind aromatische Phosphate, z.B. Triphenylphosphat und Dikresylphenylphosphat; außerdem Phosphonate wie Diphenylphosphonat, Dikresylphosphonat und ferner Phosphinate, wie der Phenyl- und/ oder der Kresylester der Methyl/Ethylphosphinsäure. Außerdem kann roter Phosphor (vorzugsweise in üblicher Weise stabilisiert), rein oder in gekapselter Form, als Flammschutzmittel in der Kombination Verwendung finden.

Als organische Stickstoffverbindungen sind für die Flammschutzmittelkombinationen beispielsweise Melamin, Cyanursäure und Salze dieser Komponenten wie Melamincyanurat, -borat und/oder -phosphat

geeignet.

Als weitere Flammschutzmittel können Metalloxide, z.B. Antimon(III)-oxid, Blei(IV)-oxid, Cer(IV)-oxid, Kupfer(II)-oxid, Molybdän(VI)-oxid, Vanadium(V)-oxid, Wismut(III)-oxid, Wolfram(VI)-oxid, Zinn(IV)-oxid und Zirkon(IV)-oxid, Zinkborate(hydrate) sowie deren Mischungen zugesetzt werden.

Beispiele für typische Füllstoffe und Pigmente sind Glaskugeln, Quarzmehl, Kalk, Kreide, Leicht- und Schwerspat, Aluminiumhydroxid, Aluminiumoxid, Magnesium- und Aluminium-Silikate wie Glimmer, Talkum oder Kaolin, Aluminiumphosphat, Magnesiumhydroxid, Calciumphosphat, Zinkborat, Zinkoxid, Eisenoxid, Titandioxid, Kohlenstoff, z.B. als Graphit oder Ruß und Kohlenstoffasern.

Die erfindungsgemäßen Spritzgießmassen werden bevorzugt durch Mischen der Komponenten mit Kneter oder Extrudern hergestellt. Es können jedoch vorteilhaft auch erst Masterbatche aus a) und b) in Polyamiden, z.B. 5 bis 35 %ige Mischungen in den erfindungsgemäß verwendeten Polyamiden hergestellt und diese dann den Polyamiden zugemischt werden.

Die flammgeschützten Polyamide erfüllen die Bedingungen des Tests nach UL-94 bei 1,6 mm und können z.B. im Elektro-Elektroniksektor, im Gehäuseteilbau und Fahrzeugbau eingesetzt werden.

Beispiel 1 (Vergleich)

3520 g Polyamid 66 werden mit 240 g (6,8 Gew.-%, bezogen auf Polyamid 66) Dechlorane® Plus 25 (chlorhaltiges Flammschutzmittel der Occidental Chemical Corporation, USA) und 240 g Zinkborat, in einem Doppelschneckenextruder von Typ ZSK 32 der Fa. Werner und Pfleiderer, Stuttgart, gemischt (Durchsatz 8 kg/Stunde, Drehzahl 80 Umdrehungen/Minute, Massetemperatur 280° C). Nach Abspinnen und Granulieren werden aus dem erhaltenen Material für den UL-94-Test geeignete Prüfkörper von 1,6 mm Dicke hergestellt. In diesem Test erhalten sie die Beurteilung "nicht bestanden". Auch mit höherem Gehalt an Dechlorane® Plus 25 wird der UL-Test mit Prüfkörpern von 1,6 mm Dicke nicht bestanden.

Beispiel 2 (erfindungsgemäß)

3480 g Polyamid 66 werden mit 240 g Dechlorane® Plus 25 6,8 Gew.-%, bezogen auf Polyamid 66), 240 g Zinkborat und 40 g Aramidfaser (1 Gew.-% in der Mischung), maximaler Durchmesser 20 µm, Schnittlänge 0,5 - 7,0 mm, (Kevlar® 29 der DuPont de Nemours, USA) in der in Beispiel 1 angegebenen Maschine gemischt und anschließend wie angegeben zu Granulat und Prüfkörpern verarbeitet. Im UL-94-Test erhalten letztere die Beurteilung V-1, sowohl für den Probensatz, der 48 h im Normklima als auch für den Probensatz, der 168 h im Warmluftofen bei 70° C gemäß den Testbedingungen gelagert wurde. Die Zähigkeit wird durch das zugesetzte Kevlar® nicht beeinflußt. Der Flammschutztest wird also durch den geringen Zusatz von aromatischen Polyamiden außerordentlich stark verbessert.

Beispiel 3

a) Herstellung der Aramidpulver

Zu 1000 ml N,N-Dimethylacetamid werden 200,25 g (1 Mol) 4,4′-Diaminodiphenylether und 202,40 g (2 Mol) Triethylamin gegeben. Der Ether geht bei Raumtemperatur unter gutem Rühren schnell in Lösung. Daraufhin wird die Vorlage auf -5° C abgekühlt. In 3 Stunden wird unter weiterem zügigen Rühren die Lösung von 203,03 g (1 Mol) Terephthalsäuredichlorid in 500 ml N,N-Dimethylacetamid zugetropft. Die Temperatur der Säurechloridlösung beträgt dabei 20° C. Schon nach kurzem Zutropfen beginnt der Kolbeninhalt trübe zu werden. Das sich bildende Aramid aus 4,4′-Diaminodiphenylether und Terephthalsäure fällt infolge Unlöslichkeit in N,N-Dimethylacetamid aus. Die Nachreaktion beträgt 2 Stunden.

Nach Stehen über Nacht wird das Reaktionsgemisch in 5 l Wasser gegeben und das Aramid abfiltriert. Das Filtrat ist neutral. Anschließend wird der erhaltene Feststoff mehrmals in Wasser aufgeschlämmt und abfiltriert, um lösliche Salze zu entfernen.

Anschließend wird das Aramid bei 80° C über Nacht im Trockenschrank getrocknet. Die Ausbeute liegt bei 93,4 % der Theorie. Das Produkt schmilzt oberhalb von 300° C. Der Stickstoffgehalt beträgt 8,2 Gew.-% (theoretisch 8,5 Gew.-%).

b) Einarbeitung in Polyamid:

3480 g Polyamid 66 werden mit 240 g Dechlorane® Plus 25 (6,8 Gew.-%, bezogen auf Polyamid 66), 240 g Zinkborat und 40 g Aramidpulver (1 Gew.-% in der Mischung, Korngröße 5 bis 13 µm) nach Beispiel 3a in der in Beispiel 1 angegebenen Maschine gemischt und anschließend wie angegeben zu Granulat und Prüfkörpern verarbeitet. Im UL-94-Test erhalten letztere die Beurteilung V-1, sowohl für den Probensatz der 48h im Normklima, als auch für den Probensatz, der 168 h im Warmluftofen bei 70° C gemäß den Testbedingungen gelagert wurde. Der Flammschutztest wird also durch den geringen Zusatz von aromatischen Polyamiden außerordentlich stark verbessert.

Beispiel 4

3360 g Polyamid 66 werden mit 240 g Dechlorane® Plus 25, 240 g Zinkborat, 240 g Melamincyanurat und 40 g Aramidpulver nach Beispiel 3a in der in Beispiel 1 angegebenen Maschine gemischt und anschließend wie angegeben zu Granulat und Prüfkörpern verarbeitet. Im Ul-94-Test erhalten letztere die Beurteilung V-0 für den Probensatz, der 48 h im Normklima, und V-1 für den Probensatz, der 168 h im Warmluftofen bei 70° C gemäß den Testbedingungen gelagert wurde. Der Flammschutztest wird also durch den geringen Zusatz von aromatischen Polyamiden außerordentlich stark verbessert.

Beispiel 5

3360 g Polyamid 66 werden mit 120 g Dechlorane® Plus 25, 240 g Zinkborat, 240 g Triphenylphosphat und 40 g Aramidpulver nach Beispiel 3a in der in Beispiel 1 angegebenen Maschine gemischt und anschließend wie angegeben zu Granulat und Prüfkörpern verarbeitet. Im UL-94-Test erhalten letztere die Beurteilung V-1, sowohl für den Probensatz, der 48 h im Normklima, als auch für den Probensatz, der 168 h im Warmluftofen bei 70° C gemäß den Testbedingungen gelagert wurde. Der Flammschutztest wird also durch den geringen Zusatz von aromatischen Polyamiden außerordentlich stark verbessert.

**Ansprüche**

1. Flammschutzmittelkombinationen mit Antidripping-Wirkung, bestehend aus

a) 0,05 bis 10 Gew.-Teilen, vorzugsweise 0,5 bis 5 Gew.-Teilen, insbesondere 0,7 bis 3,5 Gew.-Teilen von aromatischen Polyamiden und/oder Polyimidamiden mit mehr als 50 Gew.-%,. vorzugsweise mehr als 75 Gew.-% an aromatischen Aufbaukomponenten und

b) 1 bis 30 Gew.-Teilen, vorzugsweise 1 bis 12 Gew.-Teilen, insbesondere 1,5 bis 7,5 Gew.-Teilen von bekannten Flammschutzadditiven in Form organischer Halogen- und/oder Phosphor-und/oder Stickstoffverbindungen oder deren Mischungen, gegebenenfalls zusammen mit Metalloxiden, -carbonaten, - silikaten, -boraten und -phosphaten, bevorzugt Zinkborat, Zinkphosphat, Zinkcarbonat, Zinnoxid, Zinkoxid und/oder rotem Phosphor.

3. Flammschutzmittelkombinationen mit Antidripping-Wirkung nach Anspruch 1, dadurch gekennzeichnet, daß sie aus

a) 0,05 bis 10 Gew.-Teilen, vorzugsweise 0,5 bis Gew.-Teilen, insbesondere 0,7 bis 3,5 Gew.-Teilen von aromatischen Polyamiden und/oder Polyimidamiden in Form von Aramiden mit über 85 Gesamtgewichts-Teilen aromatischer Aufbaukomponenten, insbesondere aromatischer Dicarbonsäuren und Diamine, und

b) 1 bis 30 Gew.-Teilen, vorzugsweise 1 bis 12 Gew.-Teilen und insbesondere 0,7 bis 3,5 Gew.-Teilen von bekannten Flammschutzadditiven in Form organischer Halogen-und/oder Phosphor- und/oder Stickstoffverbindungen, und/oder rotem Phosphor und/oder Oxiden bzw. Salzen bestehen.

3. Verwendung von 0,5-10 Gew.-% aromatischen Polyamiden oder Polyamidimiden entsprechend Anspruch 1a) oder 1,05 bis 40 Gew.-% (innerhalb der Polyamid-Mischung) der Flammschutzmittel-Kombinationen gemäß Ansprüchen 1 und 2 zur Flammfestausrüstung von überwiegend aliphatischen/cycloaliphatischen Polyamiden und/oder gemischt (cyclo)aliphatisch/aromatischen Polyamiden mit überwiegend (cyclo)aliphatischen Anteilen.

4. Verwendung von Flammschutzmittel-Kombinationen nach Ansprüchen 1 bis 3, dadurch gekennzeichnet, daß die aromatischen Polyamide als, gegebenenfalls gemahlene, Aramidfasern eingesetzt werden.

5. Verwendung von Flammschutzmittel-Kombinationen nach Ansprüchen 1 bis 3, dadurch gekennzeichnet, daß die aromatischen Polyamide als Pulver, wie sie bei der Synthese von aromatischen Polyamiden, vorzugsweise Aramiden, nach dem Grenzflächenverfahren aus der Reaktionslösung ausfallen, eingesetzt werden.

6. Verwendung von Flammschutzmittel-Kombinationen nach Ansprüchen 1 bis 3, dadurch gekennzeichnet, daß die aromatischen Polyamide oder Polyimidamide als Niederschläge auf Trägeroberflächen von Füllstoffen wie Metalloxiden, Carbonaten, Silikaten, Boraten und Phosphaten eingesetzt werden.

7. Verwendung der Flammschutzmittel-Kombinationen nach Ansprüchen 1 bis 6, dadurch gekennzeichnet, daß Flammschutzmittelkombinationen mit organischen Phosphorderivaten, wie Phosphaten, bevorzugt aromatischen Phosphaten, Phosphonaten sowie Phosphinaten, eingesetzt werden.

8. Verwendung der Flammschutzmittel-Kombinationen nach Ansprüchen 1 bis 7, dadurch gekennzeichnet, Flammschutzmittelkombinationen mit organischen Halogenverbindungen, bevorzugt chlorhaltigen Diels-Alder-Addukten, eingesetzt werden.

9. Verwendung der Flammschutzmittel-Kombinationen nach Ansprüchen 1 bis 8, dadurch gekennzeichnet, daß Flammschutzmittelkombinationen mit organischen Stickstoffverbindungen, bevorzugt Melamin und Cyanursäure oder Derivaten dieser Komponenten eingesetzt werden.

10. Polyamidgranulate oder Polyamidformkörper auf Basis überwiegend (cyclo)aliphatischer Komponenten, enthaltend die Flammschutzmittel-Kombination nach Ansprüchen 1 bis 9.

Europäisches Patentamt

# EUROPÄISCHER RECHERCHENBERICHT

Nummer der Anmeldung

EP 89 10 3867

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | US-A-4 439 578 (N.K. SANG et al.)<br>* Ansprüche; Spalte 2, Zeilen 40-62; Spalte 10, Zeile 62 - Spalte 11, Zeile 33; Spalte 13, Zeile 67 - Spalte 14, Zeile 22 *<br>--- | 1-10 | C 08 K 13/02<br>C 08 K 5/00<br>C 08 L 101/00<br>C 08 L 77/00 //<br>(C 08 L 101/00<br>C 08 L 77:10 )<br>(C 08 L 77/00<br>C 08 L 77:10 ) |
| Y | EP-A-0 122 699 (IMPERIAL CHEMICAL INDUSTRIES PLC)<br>* Ansprüche *<br>--- | 1-10 | |
| P,Y | EP-A-0 278 559 (BIP CHEMICALS LTD)<br>* Ansprüche; Seite 2, Zeilen 48-51 *<br>----- | 1-10 | |
| | | | RECHERCHIERTE SACHGEBIETE (Int. Cl.4) |
| | | | C 08 K<br>C 08 L |

Der vorliegende Recherchenbericht wurde für alle Patentansprüche erstellt

| Recherchenort | Abschlußdatum der Recherche | Prüfer |
|---|---|---|
| DEN HAAG | 08-06-1989 | DE LOS ARCOS Y VELAZQUEZ |

**KATEGORIE DER GENANNTEN DOKUMENTE**

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPO FORM 1503 03.82 (P0403)